# EUROPÄISCHE PATENTANMELDUNG

(11) **EP 4 439 468 A1**
(43) Veröffentlichungstag der Anmeldung: **02.10.2024**
(21) Anmeldenummer: 24156270.1
(22) Anmeldetag: 07.02.2024
(51) Int. Cl.: G06T 11/60, H04N 7/15

(54) **VERFAHREN ZUR BILDVERARBEITUNG FÜR VIDEOKONFERENZEN**

(30) Priorität: 28.03.2023 DE 102023202806
(71) Anmelder: Continental Automotive Technologies GmbH, 30175 Hannover (DE)
(72) Erfinder: Dr. von Spiegel, Wolff, 30175 Hannover (DE); Gottwald, Martin, 30175 Hannover (DE); Naujack, Daniel, 30175 Hannover (DE); Hermes, Jan, 30175 Hannover (DE)
(74) Vertreter: Continental Corporation

(57) **Zusammenfassung**

Ein computerimplementiertes Verfahren 100 zur Bildverarbeitung in Videokonferenzen in einem Fahrzeug 134, wobei das Fahrzeug 134 eine erste Kamera 122 und eine zweite Kamera 124 aufweist, wird mit einem ersten Empfangsschritt 102 gebildet, in welchem von ersten Bilddaten 142 der ersten Kamera 122 und von zweiten Bilddaten 144 der zweiten Kamera 124 empfangen wird. Die Bilddaten 142, 144 enthalten zumindest ein Abbild eines Insassen 132 des Fahrzeugs 134 aus leicht unterschiedlichen Perspektiven. In einem ersten Extraktionsschritt 104 wird unter Verwendung mindestens einer der zwei Bilddaten 142, 144 eine Tiefeninformationskarte 146 extrahiert. In einem zweiten Extraktionsschritt 106 werden Merkmale in den ersten Bilddaten 142 extrahiert. In einem Klassifikationsschritt 108 werden die Merkmale als klassifizierte Merkmale 148 klassifiziert, wobei die klassifizierten Merkmale 148 zumindest den Insassen 132 enthalten. In einem Fusionsschritt 110 wird die Tiefeninformationskarte 149 und die klassifizierten Merkmale 148 zu einem dreidimensionalen Modell 152 fusioniert. In einem Syntheseschritt 114 werden die ersten Bilddaten 142 und das dreidimensionale Modell 152 zu einem synthetisierten Bild 154 synthetisiert. In einem Anzeigeschritt 116 wird das synthetisierte Bild 154 auf einer Anzeigevorrichtung 128 angezeigt.

## Beschreibung

### Technisches Gebiet

Die vorliegende Erfindung betrifft das Gebiet der Bildverarbeitungsverfahren. Insbesondere betrifft die vorliegende Erfindung ein computerimplementiertes Verfahren, ein Computerprogrammprodukt, ein computerlesbares Speichermedium und ein Datenträgersignal für die Bildverarbeitung in Videokonferenzen in einem Fahrzeug. Darüber hinaus betrifft die vorliegende Erfindung eine entsprechende Vorrichtung zur Datenverarbeitung für ein Fahrzeug.

### Technischer Hintergrund

Es sind bereits viele Vorrichtungen und Systeme bekannt, mit deren Hilfe Videokonferenzen durchgeführt werden können, wobei gleichzeitig Methoden der Bildverarbeitung zum Einsatz kommen. Dabei ist es beispielsweise üblich, den Hintergrund um das Abbild eines Teilnehmers herum durch eine Grafik zu ersetzen.

Häufig treten dabei unerwünschte Effekte, besonders an den Rändern des Abbildes des Teilnehmers auf. Ein solch unerwünschter Effekt ist beispielsweise, dass der reale Hintergrund an den Rändern des Abbildes des Teilnehmers, beispielsweise an Schultern oder Haaren, weiterhin sichtbar ist und nicht durch einen synthetischen Hintergrund ersetzt wurde.

Weiterhin ist durch die zunehmende Mobilität in der Gesellschaft eine Adaption dieser Videokonferenzsysteme in ein Fahrzeug wünschenswert. Existierende Videokonferenzsysteme sind aber nicht auf die Umstände, die während einer Autofahrt herrschen können, abgestimmt. Beispielweise kommt es bei einer Autofahrt zu einer erhöhten Dynamik der Bildbelichtung, verursacht durch sich ständig ändernde Lichtverhältnisse als Folge von Straßenleuchten oder anderen Verkehrsteilnehmern.

### Offenbarung der Erfindung

Es ist daher Aufgabe der Erfindung, ein computerimplementiertes Verfahren zur Bildverarbeitung für Videokonferenzen in einem Fahrzeug zur Verfügung zu stellen, welches die zuvor erwähnten Nachteile behebt. Außerdem ist es Aufgabe der Erfindung, ein entsprechendes Computerprogrammprodukt, computerlesbares Speichermedium, Datenträgersignal und Vorrichtung zur Datenverarbeitung für ein Fahrzeug zur Verfügung zu stellen.

Gemäß eines ersten Aspekts der Erfindung weist ein computerimplementiertes Verfahren für die Bildverarbeitung in Videokonferenzen in einem Fahrzeug mit einer ersten Kamera und einer zweiten Kamera einen Empfangsschritt auf, in welchem erste Bilddaten der ersten Kamera und zweite Bilddaten der zweiten Kamera empfangen werden. Hierbei weisen die Bilddaten ein Abbild eines Insassen des Fahrzeugs aus leicht unterschiedlichen Perspektiven auf. Weiterhin weist das Verfahren einen ersten Extraktionsschritt auf, in welchem eine Tiefeninformationskarte der ersten Bilddaten unter Verwendung mindestens einer der zwei Bilddaten extrahiert wird. Weiterhin weist das Verfahren einen zweiten Extraktionsschritt auf, in welchem Merkmale in den ersten Bilddaten extrahiert werden. Im folgenden Klassifikationsschritt des Verfahrens werden die Merkmale als klassifizierte Merkmale klassifiziert, wobei die klassifizierten Merkmale zumindest den Insassen enthalten. Das Verfahren weist darüber hinaus einen Fusionsschritt auf, in welchem die Tiefeninformationskarte und die klassifizierten Merkmale zu einem dreidimensionalen Modell fusioniert werden. Im folgenden Syntheseschritt des Verfahrens werden die ersten Bilddaten und das dreidimensionale Modell zu einem synthetisierten Bild synthetisiert. Das Verfahren weist einen Anzeigeschritt auf, in welchem das synthetisierte Bild auf einer Anzeigevorrichtung angezeigt wird.

Das so definierte computerimplementierte Verfahren basiert darauf, den Insassen des Fahrzeugs in den ersten Bilddaten zu erkennen und mit Hilfe der zusätzlichen Tiefeninformation den Bereich in den ersten Bilddaten zu bestimmen, welcher dem Abbild des Insassen entspricht, und zwar genauer als mit den bisher eingesetzten Methoden. Die Tiefeninformation wird dabei über die Disparität der ersten und zweiten Bilddaten erzeugt, weshalb diese ein Abbild des Insassen des Fahrzeugs aus leicht unterschiedlichen Perspektiven aufweisen. Es ist aber auch möglich, die Tiefeninformationskarte mit anderen Mitteln zu erhalten. Beispielsweise ist es möglich, ein künstliches neuronales Netz derart zu definieren und trainieren, dass es eine Tiefeninformationskarte aus nur einem einzigen Bild erstellt.

Weiterhin werden aus den ersten Bilddaten Merkmale extrahiert und klassifiziert, wobei dies mit den üblichen Mitteln des maschinellen Lernens für den Fachmann durchführbar ist, beispielsweise mit Objekt Detektoren. Die klassifizierten Merkmale enthalten dabei zumindest den Insassen.

Anschließend kann aus der Tiefeninformationskarte und den klassifizierten Merkmalen ein dreidimensionales Modell erstellt werden, welches beispielsweise aus den klassifizierten Merkmalen und deren Tiefeninformation besteht. Es ist auch möglich, jedem Pixel der ersten Bilddaten die Tiefeninformation hinzuzufügen.

Beispiele für klassifizierte Merkmale sind der Insasse, eine Rückenlehne, weitere Insassen, eine Kaffeetasse in der Mittelkonsole, aber auch Schultern, Nase, Augen, Haare, oder eine Brille. Klassifizierte Merkmale können auch gruppiert werden oder weitere klassifizierte Merkmale beinhalten. So könnte beispielsweise das klassifizierte Merkmal "Insasse" die klassifizierten Untermerkmale "Brille", "Nase" oder "Mund" beinhalten.

Aus dem resultierenden dreidimensionalen Modell können nun beispielsweise bestimmte klassifizierte Merkmale entfernt oder verändert werden. Mit anderen Worten, mit Hilfe des dreidimensionalen Modells können die ersten Bilddaten synthetisiert werden. Möglichkeiten zur Synthese bieten sich viele: Beispielsweise kann der Hintergrund ersetzt oder eine künstliche Belichtungssituation erzeugt werden.

Letztlich wird das synthetisierte Bild auf einer Anzeigevorrichtung angezeigt, und ermöglicht so die Teilnahme des Insassen an einer Videokonferenz, wobei nachteilige Effekte im real aufgenommenen Bild entfernt oder verbessert dargestellt sind.

In einer vorteilhaften Ausführung weist mindestens eine der zwei Kameras die Fähigkeit auf, Bilddaten aus dem infraroten Spektralbereich zu generieren.

Diese Ausführungsform ist vorteilhaft, da Bilddaten im infraroten Spektralbereich dazu verwendet werden können, die äußeren Lichtverhältnisse zu neutralisieren, beispielsweise über eine Differenz zu Bilddaten im sichtbaren Spektralbereich. Merkmale können dann unabhängig von der äußeren Beleuchtungssituation zuverlässiger extrahiert und klassifiziert werden.

In einer weiteren vorteilhaften Ausbildung des Verfahrens umfasst der Syntheseschritt das Freistellen des Abbildes des Insassen und/oder ein Ersetzen eines Hintergrundes.

In vorteilhafter Ausgestaltung umfasst der Syntheseschritt eine Modifikation von Beleuchtungseigenschaften und/oder Reflektivitätseigenschaften der klassifizierten Merkmale des dreidimensionalen Models, sofern zumindest eine zuvor festgelegte Randbedingung erfüllt ist.

Die Reflektivitätseigenschaften der klassifizierten Merkmale hängen häufig vom Material des Merkmals ab. Beispielsweise reflektiert die Oberfläche eines Kleidungsstückes aus Wolle deutlich diffuser als ein Brillengestell aus Aluminium. Die Beleuchtungseigenschaften werden aus den ersten Bilddaten extrahiert und beschreiben, von wo Lichtquellen mit welcher Intensität und mit welchem Abstrahlungsprofil in welche Richtung abstrahlen. Die Beleuchtungseigenschaften werden in das dreidimensionale Modell integriert.

Eine Modifikation der Beleuchtungs- und/oder Reflektivitätseigenschaften soll nur unter zuvor festgelegten Randbedingungen erfolgen. Solche Randbedingungen können beispielsweise so definiert sein, dass sie einer schnellen Änderung der Belichtungsverhältnisse entsprechen. Das heißt, nur wenn eine schnelle Änderung der Belichtungsverhältnisse vorliegt, beispielsweise bei einer Fahrt in der Nacht entlang einer beleuchteten Straße, wird eine entsprechende Modifikation durchgeführt.

In einer bevorzugten Variante des Verfahrens entsprechen die zuvor festgelegten Randbedingungen einer Überbelichtung eines klassifizierten Merkmales oder einer schnellen Änderung der Belichtung eines klassifizierten Merkmales.

In einer weiteren vorteilhaften Ausführung des Verfahrens umfasst die Modifikation der Beleuchtungseigenschaften und/oder Reflektivitätseigenschaften der klassifizierten Merkmale einen dritten Extraktionsschritt, in welchem eine Reflektivitätskarte auf Basis des dreidimensionalen Models extrahiert wird. Weiterhin umfasst diese Ausführung einen vierten Extraktionsschritt, in welchem die Beleuchtungseigenschaften und Reflektivitätseigenschaften der klassifizierten Merkmale auf Basis der Reflektivitätskarte extrahiert werden. In einem Modifikationsschritt werden die Beleuchtungseigenschaften und Reflektivitätseigenschaften der klassifizierten Merkmale zu modifizierten Beleuchtungseigenschaften und modifizierten Reflektivitätseigenschaften modifiziert. Weiterhin wird in einem Erzeugungsschritt das synthetisierte Bild derart erzeugt, dass die Beleuchtungseigenschaften und Reflektivitätseigenschaften durch die modifizierten Beleuchtungseigenschaften und modifizierten Reflektivitätseigenschaften ersetzt werden.

Ändern sich die äußeren Belichtungsverhältnisse beispielsweise, weil die Videokonferenz in Dunkelheit entlang einer Straße mit Straßenbeleuchtung geführt wird, wird der Insasse innerhalb kurzer zeitlicher Abstände anders beleuchtet. Dies wird als störend für die anderen Teilnehmer der Videokonferenz empfunden. Unter solchen Bedingungen ist es besonders wünschenswert, die Beleuchtungseigenschaften und/oder Reflektivitätseigenschaften bestimmter klassifizierter Merkmale zu modifizieren.

Wird eine entsprechende Randbedingung detektiert, kann eine Modifikation der Beleuchtungseigenschaften und/oder Reflektivitätseigenschaften des Insassen oder von Teilen des Insassen stattfinden, um so eine künstliche Belichtungsumgebung zu schaffen. Diese künstliche Belichtungsumgebung negiert die dynamische reale Belichtungsumgebung, so dass die anderen Teilnehmer der Videokonferenz nichts von der Dynamik des Bildes merken.

Gemäß eines zweiten Aspekts der Erfindung weist ein Computerprogrammprodukt Befehle auf, die bei der Ausführung des Programms durch einen Computer diesen veranlassen, ein computerimplementiertes Verfahren zur Bildverarbeitung für Videokonferenzen auszuführen.

Gemäß eines dritten Aspekts der Erfindung weist ein computerlesbares Speichermedium Befehle auf, die bei der Ausführung durch einen Computer diesen veranlassen, ein computerimplementiertes Verfahren zur Bildverarbeitung für Videokonferenzen auszuführen.

Gemäß eines vierten Aspekts der Erfindung überträgt ein Datenträgersignal ein Computerprogrammprodukt, bei dessen Ausführung durch einen Computer diesen veranlassen, ein computerimplementiertes Verfahren zur Bildverarbeitung für Videokonferenzen auszuführen.

Gemäß eines fünften Aspekts der Erfindung ist eine Vorrichtung zur Datenverarbeitung für das Fahrzeug derart ausgebildet, ein computerimplementiertes Verfahren zur Bildverarbeitung für Videokonferenzen auszuführen, wobei die Vorrichtung zur Datenverarbeitung zumindest einen Prozessor aufweist, der so konfiguriert ist, dass er die Schritte eines computerimplementierten Verfahrens zur Bildverarbeitung für Videokonferenzen ausführen kann. Weiterhin weist die Vorrichtung zur Datenverarbeitung zumindest ein nicht flüchtiges, computerlesbares Speichermedium auf, welches kommunikativ mit dem zumindest einen Prozessor verbunden ist, wobei Befehle in einer Programmiersprache zur Durchführung des computerimplementierten Verfahrens zur Bildverarbeitung für Videokonferenzen auf dem zumindest einen Speichermedium gespeichert sind. Weiterhin weist die Vorrichtung zur Datenverarbeitung eine erste Kamera und eine zweite Kamera auf, welche kommunikativ mit dem zumindest einen Prozessor verbunden sind. Darüber hinaus weist die Vorrichtung zur Datenverarbeitung ein Kommunikationsmittel sowie eine Anzeigevorrichtung, welche kommunikativ mit dem zumindest einen Prozessor verbunden sind.

Auf diese Weise kann die Vorrichtung zur Datenverarbeitung sowohl als einzelnes Bauteil aber auch die Methoden des verteilten Rechnens nutzen, beispielsweise dadurch, dass nur die Bilddaten an eine Cloud oder ähnliche Einrichtung gesendet wird, um die Anforderung an die Rechenleistung im Fahrzeug zu reduzieren und an die Cloud zu übertragen. Es ist auch möglich, dass ein Prozessor im Fahrzeug selbst die Schritte bis zur Klassifikation der Merkmale durchführt, dann aber alles relevanten Daten an die Cloud übermittelt, um dort die restlichen Verfahrensschritte auszuführen.

### Kurzfassung der Figuren

Die Erfindung wird nachfolgend anhand von Ausführungsbeispielen mit Hilfe von Figuren näher erläutert. Die Figuren zeigen:
Figur 1: Ein Flussdiagramm eines computerimplementierten Verfahrens zur Bildverarbeitung für Videokonferenzen;
Figur 2: Ein Ausführungsbeispiel einer Vorrichtung zur Datenverarbeitung für ein Fahrzeug;
Figur 3: Eine Ansicht eines Fahrzeuges mit einer zweiten Ausführungsform einer Vorrichtung zur Datenverarbeitung für ein Fahrzeug;
Figur 4: Ein Ablaufdiagramm eines ersten Ausführungsbeispiels des computerimplementierten Verfahrens für die Bildverarbeitung in Videokonferenzen in einem Fahrzeug; und
Figur 5: Ein zweites Ausführungsbeispiel des computerimplementierten Verfahrens für die Bildverarbeitung in Videokonferenzen in einem Fahrzeug.

### Detaillierte Beschreibung der Figuren

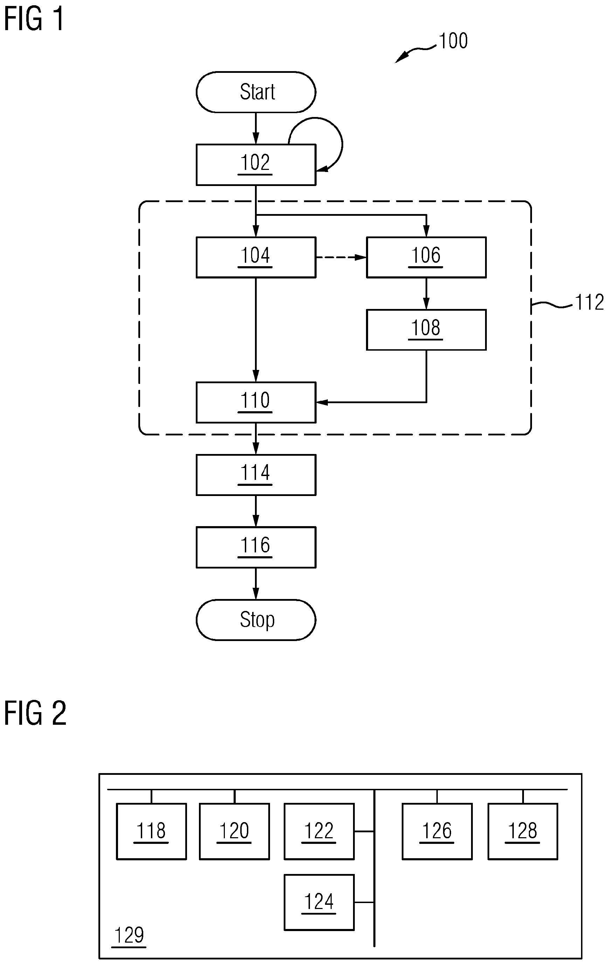

Figur 1 zeigt ein Flussdiagramm eines computerimplementierten Verfahrens 100 zur Bildverarbeitung in Videokonferenzen in einem Fahrzeug 134.

In einem Empfangsschritt 102 werden erste Bilddaten 142 einer ersten Kamera 122 und zweite Bilddaten 144 einen zweiten Kamera 124 empfangen, wobei die Bilddaten 142, 144 ein Abbild eines Insassen 132 des Fahrzeugs 134 aus leicht unterschiedlichen Perspektiven aufweisen. Die Kameras 122,124 sind dabei Teil des Fahrzeugs 134. Der Empfangsschritt 102 wird kontinuierlich ausgeführt, was in Fig. 1 durch den Pfeil entlang eines Kreises am Empfangsschritt 102 dargestellt ist.

In einem ersten Extraktionsschritt 104 wird eine Tiefeninformationskarte 146 der ersten Bilddaten 142 unter Verwendung mindestens einer der zwei Bilddaten 142, 144 extrahiert. In der Tiefeninformationskarte 146 wird jedem Pixel der ersten Bilddaten 142 eine Tiefe zugeordnet. Dies kann beispielsweise allein aus den ersten Bilddaten 142 geschehen, vorzugsweise mit Mitteln des maschinellen Lernens. Es ist auch möglich, diese Tiefeninformationskarte 146 aus der Disparität der ersten und zweiten Bilddaten 142, 144 zu erstellen.

In einem zweiten Extraktionsschritt 106 werden Merkmale in den ersten Bilddaten 142 extrahiert. Solche Merkmale können beispielsweise Personen oder Gegenstände im Fahrzeug 134 sein. Es können aber auch Ohren, Nase, Brille oder Mund als Merkmal verstanden werden. Optional kann die Tiefeninformationskarte 146 zur Hilfe genommen werden, um die Merkmale in den ersten Bilddaten 142 zu extrahieren. Diese Optionalität ist in Fig. 1 durch den gestrichelten Pfeil verdeutlicht.

Im folgenden Klassifikationsschritt 108 werden die Merkmale klassifiziert und stehen dann als klassifizierte Merkmale 148 zur Verfügung. Mit anderen Worten, den digitalen Daten, welche die Merkmale repräsentieren, ist ein Identifikator zugeordnet. Dabei enthalten die klassifizierten Merkmale 148 zumindest den Insassen 132 des Fahrzeuges 134.

In einem Fusionsschritt 110 wird anschließend die Tiefeninformationskarte 146 und die klassifizierten Merkmale 148 zu einem dreidimensionalen Modell 152 fusioniert. Im dreidimensionalen Modell 152 sind die klassifizierten Merkmale 148 im Raum erfasst und insbesondere ihre Position bekannt.

Den ersten Extraktionsschritt 104, zweiten Extraktionsschritt 106, Klassifikationsschritt 108 und Fusionsschritt 110 kann man als Analyseteil 112 des computerimplementierten Verfahrens 100 verstehen.

Den Gegenpart zum Analyseteil 112 bildet ein Syntheseschritt 114, in welchem die ersten Bilddaten 142 und das dreidimensionale Modell 152 zu einem synthetisierten Bild 154 synthetisiert werden. Im Syntheseschritt 114 kann beispielsweise ein Hintergrund entfernt oder ersetzt werden. Es ist auch möglich, die klassifizierten Merkmale 148 im dreidimensionalen Modell 152 derart zu verändern, dass eine künstliche Belichtungssituation erzeugt wird.

In einem Anzeigeschritt 116 wird das synthetisierte Bild 154 auf einer Anzeigevorrichtung 128 angezeigt. Die Anzeigevorrichtung 128 kann sowohl Teil des Fahrzeugs 134 sein, in dem der Insasse 132 sein Abbild vor oder während der Videokonferenz beobachten kann. Üblicherweise ist aber auch eine Anzeigevorrichtung 128 bei einem weiteren Teilnehmer 140 der Videokonferenz lokalisiert.

Figur 2 zeigt ein erstes Ausführungsbeispiel einer Vorrichtung zur Datenverarbeitung 129 für ein Fahrzeug 134.

Die Vorrichtung zur Datenverarbeitung 129 für ein Fahrzeug 134 weist einen Prozessor 118 auf, der so konfiguriert ist, dass er die Schritte des computerimplementierten Verfahrens 100 aus Fig. 1 ausführen kann. Weiterhin weist die Vorrichtung 129 ein nicht flüchtiges, computerlesbares Speichermedium 120 auf, welches kommunikativ mit dem Prozessor 118 verbunden ist. Auf dem Speichermedium 120 sind Befehle in einer Programmiersprache zur Durchführung des computerimplementierten Verfahrens 100 aus Fig. 1 gespeichert. Darüber hinaus weist die Vorrichtung zur Datenverarbeitung 129 eine erste Kamera 122 und eine zweite Kamera 124 auf, welche kommunikativ mit dem Prozessor 118 verbunden sind. Die Vorrichtung zur Datenverarbeitung 129 weist darüber hinaus ein Kommunikationsmittel 126 und eine Anzeigevorrichtung 128 auf, welche kommunikativ mit dem Prozessor 118 verbunden sind.

Die kommunikative Verbindung der Elemente einzelnen Elemente der Vorrichtung zur Datenverarbeitung 129 ist in Fig. 2 durch Linien zwischen den Elementen dargestellt. Bei der kommunikativen Verbindung kann es sich beispielsweise um ein BUS System handeln.

Im Beispiel von Fig. 2 ist die Vorrichtung zur Datenverarbeitung 129 als einzelnes Bauteil ausgeführt und enthält alle technischen Mittel, um das computerimplementierte Verfahren 100 aus Fig. 1 auszuführen.

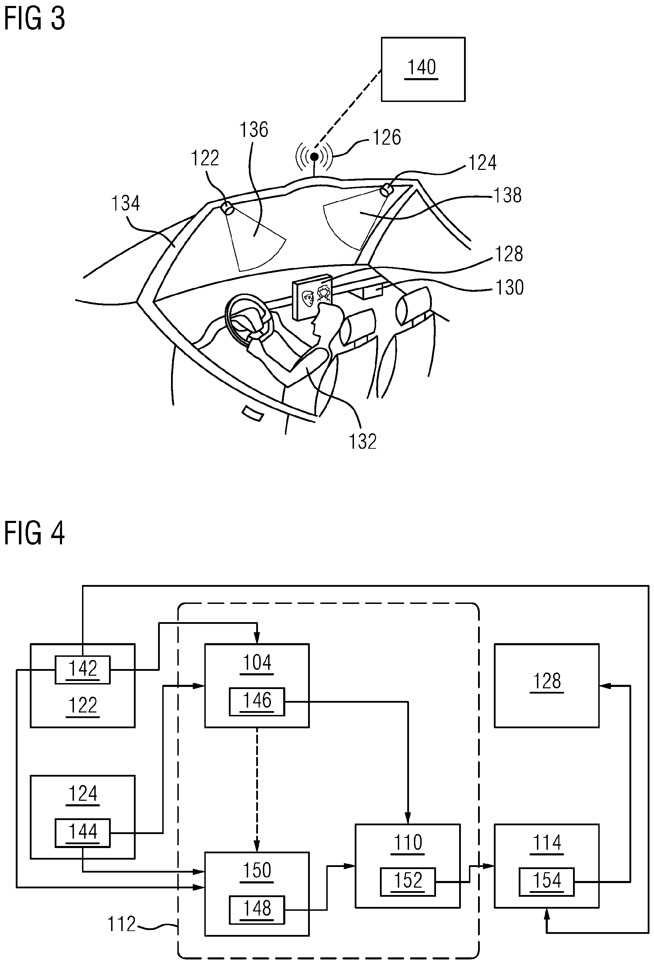

Figur 3 zeigt eine Ansicht eines Fahrzeuges 134 mit einer zweiten Ausführungsform der Vorrichtung zur Datenverarbeitung 129 für ein Fahrzeug 134.

Im Gegensatz zu Fig. 2 ist in Fig. 3 eine Ausführungsform der Vorrichtung zur Datenverarbeitung 129 gezeigt, in welcher die einzelnen Bestandteile der Vorrichtung 129 nicht in einem einzelnen Bauteil realisiert sind. Vielmehr gibt es eine Recheneinheit 130, in welcher der Prozessor 118 und das Speichermedium 120 untergebracht sind. Die erste und die zweite Kamera 122, 124, das Kommunikationsmittel 126, als auch die Anzeigevorrichtung 128 sind separate Bauteile im Fahrzeug 134 und können auch von anderen Systemen im Fahrzeug 134 genutzt werden. So ist die Anzeigevorrichtung 128 beispielsweise Teil eines Infotainmentsystems.

In Fig. 3 sind die erste Kamera 122 und die zweite Kamera 124 an unterschiedlichen Positionen am oberen Ende der Windschutzscheibe angebracht. Sie sind derart angebracht, dass ihr Blickwinkel den Insassen 132 des Fahrzeugs 134 erfassen kann. Im Beispiel von Fig. entspricht der Insasse 132 dem Fahrer. Durch die unterschiedliche Positionierung der Kameras 122, 124 enthalten ihre Bilddaten 142, 144 ein Abbild des Insassen 132 aus leicht unterschiedlichen Perspektiven. Sind die Kameras 122, 124 entsprechend kalibriert, kann aus der Disparität der ersten Bilddaten 142 der ersten Kamera 122 und der zweiten Bilddaten 144 der zweiten Kamera 124 eine Tiefeninformationskarte 146 errechnet werden.

Im Beispiel von Fig. 3 sind alle Elemente der Vorrichtung zur Datenverarbeitung 129 kommunikativ miteinander verbunden, z.B. über das Fahrzeugdatennetz. Die ersten Bilddaten 142 und die zweiten Bilddaten 144 können hierüber zur Recheneinheit 130 kommuniziert werden, welche die Extraktion der Tiefeninformationskarte 146 im ersten Extraktionsschritt 104, als auch die Extraktion im zweiten Extraktionsschritt 106 und Klassifikation im Klassifikationsschritt 108 der Merkmale vornimmt.

Darüber hinaus übernimmt die Recheneinheit 130 den Fusionsschritt 110, welcher die Tiefeninformationskarte 146 und die klassifizierten Merkmale 148 zu einem dreidimensionalen Modell 152 fusioniert. Auch die Synthese der ersten Bilddaten 142 und des dreidimensionalen Modells 152 zu einem synthetisierten Bild 154 im Syntheseschritt 114 werden von der Recheneinheit 130 übernommen.

Eine Alternative Ausführungsform könnte aber auch derart aufgebaut sein, dass die Recheneinheit 130 nur die Schritte des computerimplementierten Verfahrens 100 bis zum Klassifikationsschritt 108 ausführt, um dann die klassifizierten Merkmale 148 sowie die Tiefeninformationskarte 146 mittels des Kommunikationsmittels 126 an eine entfernte Recheneinheit wie etwa einer Cloud übermittelt. Diese könnte dann die weiteren Schritte des computerimplementierten Verfahrens 100 ausführen und das synthetisierte Bild 154 direkt den weiteren Teilnehmern 140 der Videokonferenz bereitstellen.

Im Beispiel von Fig. 3 wird das synthetisierte Bild 154 wiederum über die Datenleitungen des Fahrzeuges 134 an die Anzeigevorrichtung 128 zur Anzeige im Anzeigeschritt 116 übermittelt. Weiterhin wird das synthetisierte Bild 154 auch an weitere Teilnehmer 140 der Videokonferenz mittels des Kommunikationsmittels 126 übermittelt. Das Kommunikationsmittel 126 im Beispiel von Fig. 3 besteht Einrichtung zur drahtlosen Kommunikation über das Mobilfunknetz.

Figur 4 zeigt ein Ablaufdiagramm eines ersten Ausführungsbeispiels des computerimplementierten Verfahrens 100 zur Bildverarbeitung für Videokonferenzen.

Im Ausführungsbeispiel von Fig. 4 werden zunächst erste Bilddaten 142 der ersten Kamera 122 und zweite Bilddaten 144 der zweiten Kamera 124 erzeugt. Die ersten Bilddaten 142 und zweiten Bilddaten 144 werden nun in dem ersten Extraktionsschritt 104 zu einer Tiefeninformationskarte 146 der ersten Bilddaten 142 verarbeitet. Dies geschieht über die Berechnung der Disparität der ersten Bilddaten 142 und der zweiten Bilddaten 144.

Weiterhin werden die ersten Bilddaten 142 und die zweiten Bilddaten 144 im Beispiel von Fig. 4 einem neuronalen Netz 150 zur Verfügung gestellt, welches derart trainiert wurde, dass es klassifizierte Merkmale 148 innerhalb der ersten Bilddaten 142 klassifizieren kann. Mit anderen Worten, der zweite Extraktionsschritt 106 und der Klassifikationsschritt 108 sind hier in einem Schritt vereint. Im Stand der Technik sind hinreichend viele Methoden bekannt, um eine derartige Klassifikation von Objekten in Bilddaten durchzuführen.

Nun werden die Tiefeninformationskarte 146 und die klassifizierten Merkmale 148 in einem Fusionsschritt 110 zu einem dreidimensionalen Modell 152 fusioniert. Es steht nun also ein digitales Modell zur Verfügung, welches die Inhalte der ersten Bilddaten 142 mit einer Tiefeninformation verknüpft.

Mit Hilfe des dreidimensionalen Modells 152 können nun die ersten Bilddaten 142 zu einem synthetisierten Bild 154 synthetisiert werden. Beispielsweise können alle klassifizierten Merkmale 148 in den ersten Bilddaten 142 gelöscht werden, welche nicht dem Insassen 132 entsprechen. Damit würde effektiv der Insasse 132 freigestellt, bzw. der Hintergrund entfernt.

In einem letzten Schritt, dem Anzeigeschritt 116, wird das synthetisierte Bild 154 auf der Anzeigevorrichtung 128 angezeigt.

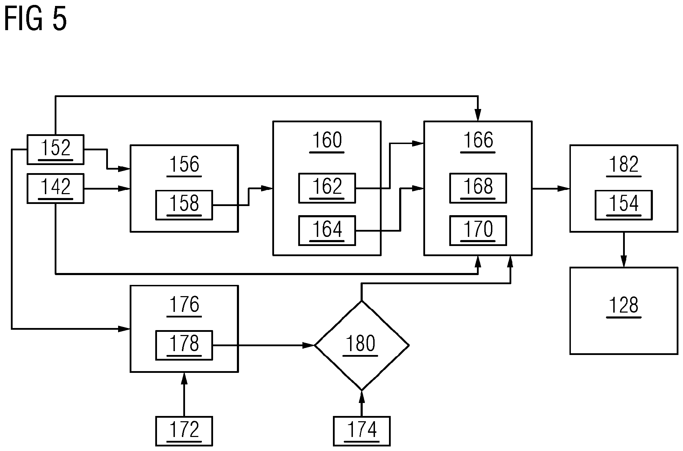

Figur 5 zeigt ein Ablaufdiagramm eines zweiten Ausführungsbeispiels des computerimplementierten Verfahrens 100 zur Bildverarbeitung für Videokonferenzen.

Im Beispiel von Fig. 5 ist es das Ziel, eine synthetische Belichtung in den ersten Bilddaten 142 zu generieren. Dies ist vor allem dann von Vorteil, wenn die Bilddynamik sehr hoch ist, beispielsweise durch sich ständig ändernde reale Belichtungsverhältnisse. Eine solche schnelle Änderung kann beispielsweise durch die Lampen eines hinterherfahrenden Fahrzeugs entstehen oder aber durch eine Straßenbeleuchtung in relativer Dunkelheit. Eine synthetische Belichtungssituation kann vorzugsweise dazu dienen, diese großen dynamischen Effekte abzumildern.

Im Beispiel von Fig. 5 ist das dreidimensionale Modell 152 analog zu Fig. 4 bereits erstellt worden. Zusammen mit den ersten Bilddaten 142 wird das dreidimensionale Modell 152 in einem dritten Extraktionsschritt 156 dazu genutzt, eine Reflektivitätskarte 158 zu erstellen. Die Reflektivitätskarte 158 enthält Informationen über das Oberflächenmaterial, die Verteilung der Lichtquellen und der Beobachtungsgeometrie. Mit anderen Worten, die Reflektivitätskarte 158 enthält implizit Informationen über die Reflektivitätseigenschaften 164 der klassifizierten Merkmale und der Beleuchtungseigenschaften 162 in den ersten Bilddaten 142.

In einem vierten Extraktionsschritt 160 wird die Reflektivitätskarte 158 dazu genutzt, die Beleuchtungseigenschaften 162 und Reflektivitätseigenschaften 164 der klassifizierten Merkmale 148 zu extrahieren. Dieser Schritt geschieht in Fig. 5 mit einem entsprechend trainierten neuronalen Netz.

Das dreidimensionale Modell 152 wird außerdem einem Analyseschritt 176 zur Verfügung gestellt, in welchem die klassifizierten Merkmale 148 auf das Vorkommen einer Randbedingung 172 analysiert wird. Eine solche zuvor festgelegte Randbedingung 172 kann beispielsweise das Auftreten eines optischen Reflexes sein.

Ist eine zuvor festgelegte Randbedingung 172 als Vorkommnis 178 detektiert worden, wird das Vorkommnis 178 gegen einen zuvor festgelegten Grenzwert 174 in einem Abgleichschritt 180 abgeglichen. Im Beispiel eines optischen Reflexes kann der Grenzwert 174 beispielsweise eine spezifische Belichtungsstärke sein. Ein solch optischer Reflex kann dadurch entstehen, dass der Insasse 132 des Fahrzeuges 134 eine Brille trägt und durch den Sonnenstand ein optischer Reflex in die Kamera 122, 124 geworfen wird.

Übersteigt keine der zuvor festgelegten Randbedingungen 172 den Grenzwert 174, wird im Beispiel von Fig. 5 die ersten Bilddaten 142 unverändert auf der Anzeigevorrichtung 128 angezeigt. Wird jedoch eine zuvor festgelegte Randbedingung 172 oberhalb des Grenzwertes 174 detektiert, so wird in einem Modifikationsschritt 166 die Beleuchtungseigenschaften 162 und die Reflektivitätseigenschaften 164 der klassifizierten Merkmale 148 modifiziert. Die resultierenden modifizierten Beleuchtungseigenschaften 168 und modifizierten Reflektivitätseigenschaften 170 können beispielsweise derart ausgestaltet sein, dass sie den optischen Reflex nicht mehr enthalten. In einem Erzeugungsschritt 182 wird das synthetisierte Bild 154 derart erzeugt, dass die Beleuchtungseigenschaften 162 und Reflektivitätseigenschaften 164 durch die modifizierten Beleuchtungseigenschaften 168 und modifizierten Reflektivitätseigenschaften 170 ersetzt werden. Mit anderen Worten, das synthetisierte Bild 154 enthält den optischen Reflex nicht mehr.

Letztlich wird das synthetisierte Bild 154, welches den optischen Reflex nicht mehr aufweist, an die Anzeigevorrichtung 128 zur Anzeige übermittelt.

### Bezugszeichenliste

- 100: Verfahren
- 102: Empfangsschritt
- 104: Erster Extraktionsschritt
- 106: Zweiter Extraktionsschritt
- 108: Klassifikationsschritt
- 110: Fusionsschritt
- 112: Analyseteil
- 114: Syntheseschritt
- 116: Anzeigeschritt
- 118: Prozessor
- 120: Speichermedium
- 122: Erste Kamera
- 124: Zweite Kamera
- 126: Kommunikationsmittel
- 128: Anzeigevorrichtung
- 129: Vorrichtung zur Datenverarbeitung
- 130: Recheneinheit
- 132: Insasse
- 134: Fahrzeug
- 136: Bildfeld der ersten Kamera
- 138: Bildfeld der zweiten Kamera
- 140: Weiterer Teilnehmer
- 142: Erste Bilddaten
- 144: Zweite Bilddaten
- 146: Tiefeninformationskarte
- 148: Klassifizierte Merkmale
- 150: Neuronales Netzwerk
- 152: Dreidimensionales Modell
- 154: Synthetisiertes Bild
- 156: Dritter Extraktionsschritt
- 158: Reflektivitätskarte
- 160: Vierter Extraktionsschritt
- 162: Beleuchtungseigenschaften
- 164: Reflektivitätseigenschaften
- 166: Modifkationsschritt
- 168: modifizierte Beleuchtungseigenschaften
- 170: modifizierte Reflektivitätseigenschaften
- 172: zuvor festgelegte Randbedingung
- 174: Grenzwert
- 176: Analyseschritt
- 178: Vorkommnis
- 180: Abgleichschritt
- 182: Erzeugungsschritt

## Patentansprüche

1. Computerimplementiertes Verfahren (100) für die Bildverarbeitung in Videokonferenzen in einem Fahrzeug (134), wobei das Fahrzeug (134) eine erste Kamera (122) und eine zweite Kamera (124) aufweist,
wobei das Verfahren (100) durch folgende Schritte gebildet wird:
a) Empfang, in einem Empfangsschritt (102), von ersten Bilddaten (142) der ersten Kamera (122) und von zweiten Bilddaten (144) der zweiten Kamera (124),
wobei die Bilddaten (122, 124) ein Abbild eines Insassen (132) des Fahrzeugs (134) aus leicht unterschiedlichen Perspektiven aufweisen;
b) Extraktion, in einem ersten Extraktionsschritt (104), einer Tiefeninformationskarte (146) der ersten Bilddaten (142) unter Verwendung mindestens einer der zwei Bilddaten (142, 144);
c) Extraktion, in einem zweiten Extraktionsschritt (106), von Merkmalen in den ersten Bilddaten (142);
d) Klassifikation, in einem Klassifikationsschritt (108), der Merkmale als klassifizierte Merkmale (148),
wobei die klassifizierten Merkmale (148) zumindest den Insassen (132) enthalten;
e) Fusion, in einem Fusionsschritt (110), der Tiefeninformationskarte (146) und der klassifizierten Merkmale (148) zu einem dreidimensionalen Modell (152);
f) Synthese, in einem Syntheseschritt (114), der ersten Bilddaten (142) und des dreidimensionalen Modells (152) zu einem synthetisierten Bild (154);
g) Anzeige, in einem Anzeigeschritt (116), des synthetisierten Bildes (154) auf einer Anzeigevorrichtung (128).

2. Computerimplementiertes Verfahren nach Anspruch 1, **dadurch gekennzeichnet, dass** mindestens eine der zwei Kameras (122, 124) die Fähigkeit aufweist, Bilddaten (142, 144) aus dem infraroten Spektralbereich zu generieren.

3. Computerimplementiertes Verfahren nach Anspruch 1 oder 2, **dadurch gekennzeichnet, dass** der Syntheseschritt (114) das Freistellen des Abbildes des Insassen (132) und/oder ein Ersetzen eines Hintergrundes umfasst.

4. Computerimplementiertes Verfahren nach einem der vorhergehenden Ansprüche, **dadurch gekennzeichnet, dass** der Syntheseschritt (114) eine Modifikation von Beleuchtungseigenschaften (162) und/oder Reflektivitätseigenschaften (164) der klassifizierten Merkmale (148) des dreidimensionalen Modells (152) umfasst, sofern zumindest eine zuvor festgelegte Randbedingung (172) erfüllt ist.

5. Computerimplementiertes Verfahren nach Anspruch 4, **dadurch gekennzeichnet, dass** die zuvor festgelegte Randbedingung (172) einer Überbelichtung eines klassifizierten Merkmales (148) oder einer schnellen Änderung der Belichtung eines klassifizierten Merkmales (148) entspricht.

6. Computerimplementiertes Verfahren nach Anspruch 4 oder 5, **dadurch gekennzeichnet, dass** die Modifikation der Beleuchtungseigenschaften (162) und/oder Reflektivitätseigenschaften (164) der klassifizierten Merkmale (148) folgende Schritte umfasst:
h) Extraktion, in einem dritten Extraktionsschritt (156), einer Reflektivitätskarte (158) auf Basis des dreidimensionalen Modells (152);
i) Extraktion, in einem vierten Extraktionsschritt (160), der Beleuchtungseigenschaften (162) und Reflektivitätseigenschaften (164) der klassifizierten Merkmale (148) auf Basis der Reflektivitätskarte (158);
j) Modifikation, in einem Modifkationsschritt (166), der Beleuchtungseigenschaften (162) und Reflektivitätseigenschaften (164) der klassifizierten Merkmale (148) zu modifizierten Beleuchtungseigenschaften (168) und modifizierten Reflektivitätseigenschaften (170);
k) Erzeugung, in einem Erzeugungsschritt (182), des synthetisierten Bildes (154) derart, dass die Beleuchtungseigenschaften (162) und Reflektivitätseigenschaften (164) durch die modifizierten Beleuchtungseigenschaften (168) und modifizierten Reflektivitätseigenschaften (170) ersetzt werden.

7. Computerprogrammprodukt, aufweisend Befehle, die bei der Ausführung des Programms durch einen Computer diesen veranlassen, das Verfahren (100) nach einem der vorhergehenden Ansprüche auszuführen.

8. Computerlesbares Speichermedium (120), aufweisend Befehle, die bei der Ausführung durch einen Computer diesen veranlassen, das Verfahren (100) nach einem der Ansprüche 1 bis 6 auszuführen.

9. Datenträgersignal, welches das Computerprogrammprodukt nach Anspruch 7 überträgt.

10. Vorrichtung zur Datenverarbeitung (129) für ein Fahrzeug (134), ausgebildet, um ein computerimplementiertes Verfahrens (100) nach einem der Ansprüche 1 bis 6 auszuführen, wobei die Vorrichtung zur Datenverarbeitung (129) für ein Fahrzeug (134) aufweist:
a) zumindest einen Prozessor (118), der so konfiguriert ist, dass er die Schritte des computerimplementierten Verfahrens (100) nach einem der Ansprüche 1 bis 6 ausführen kann;
b) zumindest ein nicht-flüchtiges, computerlesbares Speichermedium (120), welches kommunikativ mit dem zumindest Prozessor (118) verbunden ist, wobei Befehle in einer Programmiersprache zur Durchführung eines computerimplementierten Verfahrens (100) nach einem der Ansprüche 1 bis 6 auf dem Speichermedium (120) gespeichert sind;
c) eine erste Kamera (122), welche kommunikativ mit dem zumindest einen Prozessor (118) verbunden ist;
d) eine zweite Kamera (124), welche kommunikativ mit dem zumindest einen Prozessor (118) verbunden ist;
e) ein Kommunikationsmittel (126), welches kommunikativ mit dem zumindest einen Prozessor (118) verbunden ist; und
f) eine Anzeigevorrichtung (128), welche kommunikativ mit dem zumindest einen Prozessor (118) verbunden ist.
